(19) Europäisches Patentamt
European Patent Office
Office européen des brevets

(11) **EP 3 199 573 B1**

(12) **EUROPEAN PATENT SPECIFICATION**

(45) Date of publication and mention
of the grant of the patent:
**08.07.2020 Bulletin 2020/28**

(21) Application number: **15859009.1**

(22) Date of filing: **13.11.2015**

(51) Int Cl.:
*C08J 3/22* (2006.01)        *C08J 3/00* (2006.01)
*B60C 1/00* (2006.01)        *C08K 3/36* (2006.01)
*C08L 9/00* (2006.01)        *C08L 91/00* (2006.01)

(86) International application number:
**PCT/JP2015/082008**

(87) International publication number:
**WO 2016/076422 (19.05.2016 Gazette 2016/20)**

(54) **PROCESS FOR PREPARING VULCANIZED RUBBER COMPOSITION, VULCANIZED RUBBER COMPOSITION, AND STUDLESS TIRE USING SAME**

VERFAHREN ZUR HERSTELLUNG EINER GUMMIZUSAMMENSETZUNG, GUMMIZUSAMMENSETZUNG UND SPIKELOSER REIFEN DAMIT

PROCÉDÉ DE PRODUCTION D'UNE COMPOSITION DE CAOUTCHOUC VULCANISÉ, COMPOSITION DE CAOUTCHOUC VULCANISÉ, ET PNEU SANS CLOUS L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2014 JP 2014232212**

(43) Date of publication of application:
**02.08.2017 Bulletin 2017/31**

(73) Proprietor: **Sumitomo Rubber Industries, Ltd.**
**Kobe-shi, Hyogo 651-0072 (JP)**

(72) Inventors:
• **TAKENAKA, Mikako**
**Kobe-shi**
**Hyogo 651-0072 (JP)**
• **KOJIMA, Ryoji**
**Kobe-shi**
**Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 233 317          WO-A1-2011/099395**
**WO-A1-2015/076048        JP-A- H1 160 812**
**JP-A- H06 248 117        JP-A- 2003 292 676**
**JP-A- 2014 145 063        JP-A- 2015 229 701**
**US-A1- 2012 305 828**

• **DATABASE WPI Week 200703 Thomson Scientific, London, GB; AN 2007-021114 XP002781362, & JP 2006 306930 A (TOYO RUBBER IND CO LTD) 9 November 2006 (2006-11-09)**

**Description**

TECHNICAL FIELD

The present invention relates to a process for preparing a vulcanized rubber composition, the vulcanized rubber composition and a studless tire produced using the vulcanized rubber composition.

BACKGROUND OF THE INVENTION

For running on ice and snow on a road, use of a studded tire and fitting of chains on tires have been employed so far, and in order to cope with an environmental problem such as a problem with a dust caused thereby, a studless tire has been developed. In order to enhance low temperature property of a studless tire, various improvements have been made from material and design points of view, and for example, a rubber composition prepared by compounding a large amount of mineral oil to a diene rubber being excellent in low temperature property, or the like has been used. However, generally as an amount of mineral oil is increased, abrasion resistance is decreased.

On an ice- and snow-covered road, as compared with a normal road surface, a friction coefficient of a tire decreases significantly and slippage is apt to occur. Therefore, not only low temperature property but also well-balanced performance on snow and ice (grip performance on snow and ice) and abrasion resistance are demanded for a studless tire. However, in many cases, performance on snow and ice is inconsistent with abrasion resistance, and it is generally difficult to improve the both properties simultaneously.

In order to improve performance on snow and ice and abrasion resistance in good balance, there is a prior art (Patent Document 1) for blending silica and a softening agent in large amounts. However, there is still a room for improvement from the viewpoint of well-balanced improvement of the both performances.

Further, a method of compounding a plurality of polymer (rubber) components (polymer blend) has been employed as a method of improving various tire performances such as low temperature property, performance on snow and ice and abrasion resistance in good balance. Specifically, a mainstream of the method is to blend some polymer components represented by a styrene-butadiene rubber (SBR), a butadiene rubber (BR), and a natural rubber (NR) as rubber components for a tire. This is a means for making good use of characteristic of each polymer component and deriving physical properties of a rubber composition which cannot be derived only by a single polymer component.

In this polymer blend, a phase structure (morphology) of each rubber component after vulcanization and a degree of distribution (localization) of a filler into each rubber phase will be important factors for deciding physical properties. Elements for deciding control of morphology and localization of a filler are very complicated, and various studies have been made in order to exhibit physical properties of a tire in good balance, but there is a room for improvement in any of the studies.

For example, Patent Document 2 discloses a technology of specifying a particle size of an island phase and a silica distribution in an sea-island matrix of a rubber composition for a tire tread comprising a styrene-butadiene rubber. However, regarding a concrete method enabling the morphology thereof to be realized, there are described only use of a master batch comprising silica and adjustment of a kneading time and a rotation torque of a rotor, and in such a method, the morphology is affected greatly by kneading and vulcanizing conditions, and therefore, stable control of the morphology is difficult. Further, the rubber component disclosed in examples is a combination of styrene-butadiene rubbers having relatively similar polarities. Therefore, it is apparent that the disclosed technology cannot be applied to the blending of rubber components having greatly different polarities, namely greatly different affinities for silica such as blending of a butadiene rubber and a natural rubber.

Particularly in the case of control of dispersion of silica between the phases using a master batch comprising silica, even if a desired morphology and silica dispersion are achieved temporarily, in many cases, the morphology and the silica dispersion change with a lapse of time and therefore, it was difficult to form a morphology being stable with a lapse of time of more than several months.

Patent Document 3 discloses a technology relating to control of a morphology and localization of silica in a compounding formulation comprising a natural rubber and a butadiene rubber. However, there is no description regarding the control of localization of silica into the butadiene rubber side in the case where the butadiene rubber which is disadvantageous to localization of silica forms a continuous phase.

Patent Document 4 discloses kneading a premix containing silica and isoprene rubber with a premix containing silica and butadiene rubber. This document does not describe the distribution state of silica between the isoprene rubber and the butadiene rubber phases and how to control it.

Patent Documents 5 and 8 disclose the production of rubber compositions containing an isoprene-based rubber, a butadiene-based rubber and silica. These and other ingredients are mixed in one step, without previous preparation of masterbatches.

Patent Documents 6 and 7 disclose the preparation of a masterbatch containing natural rubber and silica. However, the final rubber composition is obtained by mixing this masterbatch with butadiene rubber and other ingredients in one step, without previous preparation of a separate masterbatch comprising butadiene rubber and silica.

A natural rubber is an important rubber component in a rubber composition for a tire, especially for a side wall because of its excellent mechanical strength, etc. However, in the case of blending with a butadiene rubber, localization of silica is apt to arise, and it is necessary to set the compounding formulation while controlling a distributing state of silica. However, so far a morphology and a distribution state of silica have not been checked sufficiently, and there was a case of a compounding formulation giving an insufficient exhibition of physical properties.

Furthermore, recently, there is a tendency of conducting modification of a natural rubber for enhancing affinity thereof for silica in order to aim at enhancement of fuel efficiency, which makes possibility of localization of silica into a natural rubber more significant.

Further, recently there are many cases of compounding a high cis butadiene rubber being excellent in abrasion resistance and low temperature grip performance. However, among diene rubbers, a high cis butadiene rubber is low in affinity particularly for silica and in a compounding system thereof with a natural rubber, there is a tendency that silica is hardly incorporated into a high cis butadiene rubber phase. Therefore, in a conventional system of compounding a high cis butadiene rubber, in some cases, a compounding formulation so as not to exhibit sufficient physical properties was employed while a morphology and a state of silica distribution were not confirmed.

In particular, in a rubber composition for a side wall, it is important to prepare a rubber composition comprising, as a continuous phase, a butadiene rubber having performance required for a side wall such as flex-crack resistance, and a technology of conducting control of silica localization on a continuous phase rubber component making a great contribution to abrasion resistance is essential.

Further, a natural rubber tends to hardly form a continuous phase as compared with a butadiene rubber, and in a compounding system where a natural rubber is blended in an amount of not more than 50 parts by mass based on 100 parts by mass of rubber components, such a tendency is further significant, and a so-called island phase is formed. Generally, a circumference of a rubber component being present in an island phase is solidified with a rubber component of a continuous phase, and therefore, there is a tendency that a hardness of the rubber component of an island phase increases and a rubber elasticity thereof is lowered. If a filler is localized, the tendency thereof increases more, and as a result, a difference in a hardness from the continuous phase rubber component increases, thereby easily causing a decrease in a rubber strength and abrasion resistance. A natural rubber is apt to have a hardness larger than a butadiene rubber even in the case of a single use thereof, and therefore, primarily it is not desirable that a difference in hardness further increases due to localization of silica. Therefore, development of a technology of not causing excessive localization of silica at a natural rubber side is important.

With respect to formation of a morphology of a plurality of polymer components in a rubber composition for a tire, only a compatible type (single phase) or in the case of incompatible type, only an sea-island phase structure, wherein a phase (island phase) of other particulate component is present in a continuous phase (sea phase), have been studied so far.

Therefore, in a system using a blend of a butadiene rubber and a natural rubber which is useful for exhibiting physical properties of a tire while polarities thereof are different from each other, development of technologies for morphology control and silica distribution to exhibit good physical properties of a rubber has been considered to be necessary.

PRIOR ART DOCUMENT

Patent Document

Patent Document 1: JP 2011-038057 A

Patent Document 2: JP 2006-089636 A

Patent Document 3: JP 2006-348222 A

Patent Document 4: EP 2 233 317 A1

Patent Document 5: US 2012/0305828 A1

Patent Document 6: JP 2006-306930 A

Patent Document 7: JP H06-248117 A

Patent Document 8: JP 2014-145063 A

SUMMARY OF THE INVENTION

PROBLEM TO BE SOLVED BY THE INVENTION

It is an object of the present invention to provide a process for preparing a vulcanized rubber composition being capable of well-balanced improvement of performance on ice and abrasion resistance, a vulcanized rubber composition having excellent performance on ice and abrasion resistance, and a studless tire comprising a tread composed of the vulcanized rubber composition.

MEANS TO SOLVE THE PROBLEM

The present invention relates to:

[1] a process according to claim 1,
[2] the process of the above [1], wherein the butadiene rubber has a cis-1,4 bond content of not less than 90%, preferably not less than 95%,
[3] the process of the above [1] or [2], wherein the vulcanized rubber composition comprises 30 to 120 parts by mass, preferably 30 to 70 parts by mass of a filler and 15 to 80 parts by mass, preferably 20 to 70 parts by mass of a softening agent based on 100 parts by mass of a rubber component comprising the isoprene rubber and the butadiene rubber, and the filler comprises not less than 50% by mass, preferably not less than 70% by mass of silica based on a total amount of the filler,
[4] a vulcanized rubber composition obtainable by the process of any one of the above [1] to [3],
[5] the vulcanized rubber composition of the above [4], wherein the butadiene rubber has a cis-1,4 bond content of not less than 95%,
[6] the vulcanized rubber composition of the above [4] or [5], comprising 30 to 70 parts by mass of a filler and 20 to 70 parts by mass of a softening agent based on 100 parts by mass of the rubber components comprising the isoprene rubber and the butadiene rubber, wherein the filler comprises not less than 70% by mass of silica based on the total amount of filler,
and
[7] a studless tire comprising a tread composed of the vulcanized rubber composition of any one of the above [4] to [6].

EFFECTS OF THE INVENTION

According to the present invention, after an isoprene rubber and a butadiene rubber are respectively combined with silica to produce respective master batches, the obtained master batches are kneaded, thereby enabling performance on ice and abrasion resistance of an obtained vulcanized rubber composition to be improved in good balance. Further, by using this vulcanized rubber composition for a tire member such as a tread, a studless tire being excellent in these performances can be provided.

BRIEF DESCRIPTION OF THE DRAWINGS

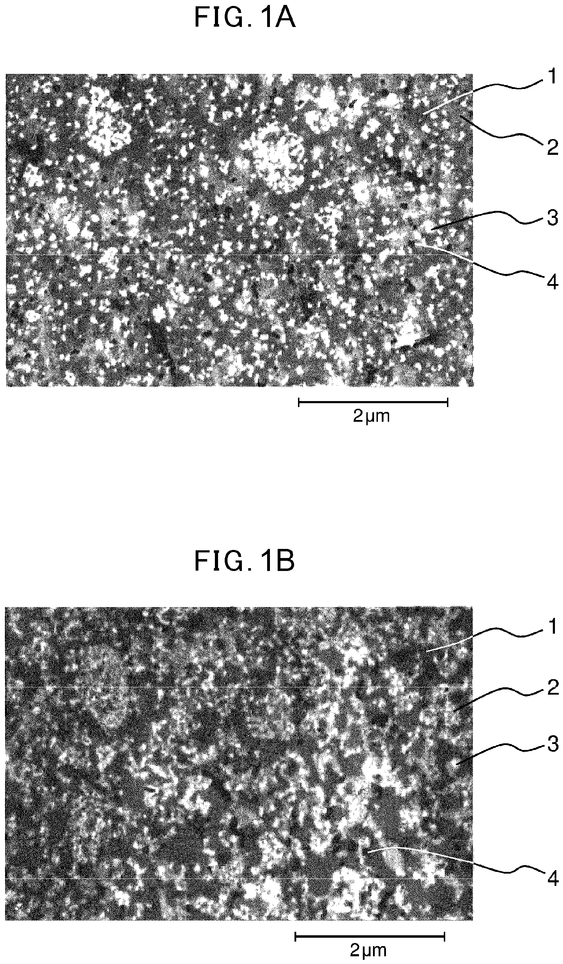

FIG. 1A is a figure showing an SEM photograph of a cross section of a vulcanized rubber composition wherein silica is well dispersed.
FIG. 1B is a figure showing an SEM photograph of a cross section of a vulcanized rubber composition wherein silica is localized.

EMBODIMENT FOR CARRYING OUT THE INVENTION

The process for preparing a vulcanized rubber composition which is one embodiment of the present invention comprises (a) a step of preparing a master batch comprising a butadiene rubber (BR) and silica (BR master batch), (b) a step of preparing a master batch comprising an isoprene rubber (IR) and silica (IR master batch), (c) a step of kneading the BR master batch obtained in the step (a) and the IR master batch obtained in the step (b), and (d) a step of vulcanizing a kneaded product obtained in the step (c), and the obtained vulcanized rubber composition has predetermined properties. As mentioned above, by kneading the master batches prepared separately by kneading each rubber component with silica, the silica which is prone to be localized in an isoprene rubber such as natural rubber can also be localized in the butadiene rubber, and it is possible to easily prepare a vulcanized rubber composition which satisfies a predetermined abundance ratio $\alpha$ of silica in the BR phase, and satisfies a predetermined proportion $\beta$ of the butadiene rubber, thereby enabling the silica to improve performance on ice without deteriorating excellent abrasion resistance of the isoprene rubber (IR).

A dispersion state of silica to the rubber components in the vulcanized rubber composition can be observed with a scanning electron microscope (SEM). For example, in Fig. 1A which is one embodiment of the present invention, a phase 1 comprising a butadiene rubber (BR phase) forms a sea phase, a phase 2 comprising an isoprene rubber (natural rubber) (IR phase) forms an island phase, and silica 3 is dispersed to both of the BR phase 1 and the IR phase 2. Meanwhile, in Fig. 1B which is different from the embodiment of the present invention, silica 3 is localized in the IR phase 2 and is not dispersed to both phases, although the BR phase 1 forms a sea phase and the IR phase 2 forms an island phase similarly to Fig. 1A.

(a) Step of preparing a BR master batch (kneading step X1)

The process for preparing the BR master batch is not limited particularly, and the master batch can be prepared by kneading the BR and silica. The kneading method is not limited particularly, and a kneader, which is usually used in a rubber industry, such as a Banbury mixer or an open roll can be used. The master batch can also be prepared, for example, as a wet master batch obtainable by mixing a BR latex with an aqueous dispersion of silica.

A kneading temperature in the kneading step X1 is preferably not less than 80°C, more preferably not less than 100°C, further preferably not less than 140°C. The kneading temperature of not less than 80°C enables a reaction of a silane coupling agent with silica to be advanced sufficiently and the silica to be dispersed satisfactorily and makes performance on snow and ice and abrasion resistance be easily improved in good balance. Further, the kneading temperature in the kneading step X1 is preferably 200°C or lower, more preferably 190°C or lower, further preferably 180°C or lower. The kneading temperature of 200°C or lower tends to inhibit an increase in a Mooney viscosity and make processability satisfactory. Further, the temperature of a kneaded product at the time of discharge from the kneader can be from 130°C to 160°C.

A kneading time in the kneading step X1 is not limited particularly, and is usually 30 seconds or more, preferably from 1 to 30 minutes, more preferably from 3 to 6 minutes.

The BR is not limited particularly, and it is possible to use, for example, BR having a cis-1,4 bond content of less than 50% (low cis BR), BR having a cis-1,4 bond content of not less than 90% (high cis BR), a rare earth-based butadiene rubber synthesized using a rare earth element catalyst (rare earth-based BR), BR having a syndiotactic polybutadiene crystal (SPB-containing BR), modified BR (high cis modified BR, low cis modified BR) and the like. Among these, it is preferable to use at least one selected from the group consisting of a high cis BR, a low cis BR and a low cis modified BR, and use of a high cis BR is more preferable.

Examples of the high cis BR include BR730 and BR51 available from JSR Corporation, BR1220 available from ZEON CORPORATION, BR130B, BR150B and BR710 available from Ube Industries, Ltd. and the like. Among the high cis BRs, those having a cis-1,4 bond content of not less than 95% are further preferable. These may be used alone or may be used in combination of two or more thereof. When the high cis BR is compounded, low temperature property and abrasion resistance can be enhanced. Examples of the low cis BR include BR1250 available from ZEON CORPORATION and the like. These may be used alone or may be used in combination of two or more thereof.

An amount of silica to be compounded in the kneading step X1 is preferably not less than 40 parts by mass, more preferably not less than 50 parts by mass based on 100 parts by mass of the BR. When the amount of silica is not less than 40 parts by mass, a sufficient effect of localizing the silica in the BR phase tends to be obtained. Further, the amount of silica to be compounded in the kneading step X1 is preferably not more than 100 parts by mass, more preferably not more than 80 parts by mass based on 100 parts by mass of the BR. When the amount of silica is not more than 100 parts by mass, dispersion of the silica is easy, and processability can be made satisfactory.

The silica is not limited particularly, and usual ones in tire industries, for example, silica (silicic acid anhydride) prepared by a dry method, silica (hydrous silicic acid) prepared by a wet method, and the like can be used.

A nitrogen adsorption specific surface area ($N_2SA$) of silica is preferably not less than 70 $m^2/g$, more preferably not less than 140 $m^2/g$. When silica has $N_2SA$ of not less than 70 $m^2/g$, sufficient reinforcing property can be obtained and breaking resistance and abrasion resistance can be made satisfactory. The $N_2SA$ of silica is preferably not more than 220 $m^2/g$, more preferably not more than 200 $m^2/g$. When the $N_2SA$ of silica is not more than 220 $m^2/g$, dispersion of the silica is easy and processability can be made satisfactory. Herein, the $N_2SA$ of silica is a value measured by a BET method in accordance with ASTM D3037-81.

In the kneading step X1, it is preferable to knead a silane coupling agent together with the silica. The silane coupling agent is not particularly limited, and any silane coupling agents which have been used in rubber industries in combination with silica can be used. Examples thereof include sulfide silane coupling agents such as bis(3-triethoxysilylpropyl)tetrasulfide, bis(2-triethoxysilylethyl) tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropyl methacrylate monosulfide, and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyl trimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane; chloro silane coupling agents such as 3-chloropropyltrimethoxysilane, 3-chloropropyltriethoxysilane, 2-chloroethyltrimethoxysilane, and 2-chloroethyltriethoxysilane; and the like. These silane coupling agents may be used alone or may be used in combination of two or more thereof. Among these, from the view point of good reactivity with silica, sulfide silane coupling agents are preferred, and bis(3-triethoxysilylpropyl)disulfide is particularly preferred.

When the silane coupling agent is compounded, the content thereof is preferably not less than 3 parts by mass, more preferably not less than 6 parts by mass based on 100 parts by mass of silica. The content of silane coupling agent of not less than 3 parts by mass makes it possible to obtain satisfactory breaking strength. The content of silane coupling agent based on 100 parts by mass of silica is preferably not more than 12 parts by mass, more preferably not more than 10 parts by mass. The content of silane coupling agent of not more than 12 parts by mass makes it possible to obtain an effect offsetting increase in cost.

(b) Step of preparing IR master batch (kneading step X2)

The IR master batch can be prepared by kneading the IR and silica. The kneading method and the kneading conditions are the same as in the above-mentioned kneading step X1. Further, the IR master batch can be prepared as a wet master batch obtained by mixing an IR latex with a water dispersion of silica in the same manner as in the kneading step X1.

The isoprene rubber (IR) to be used in the present invention is not limited particularly, and usual ones which have been used in rubber industries can be used, and there are, for example, natural rubbers such as SIR20, RSS#3 and TSR20. Further, in the present invention, the isoprene rubber includes a reformed natural rubber, a modified natural rubber, a synthetic isoprene rubber and a modified synthetic isoprene rubber.

An amount of silica compounded in the kneading step X2 is preferably not less than 15 parts by mass, more preferably not less than 30 parts by mass based on 100 parts by mass of the IR. When the compounding amount of silica is not less than 15 parts by mass, a sufficient effect of dispersing the silica can be obtained. Further, the amount of silica compounded in the kneading step X2 is preferably not more than 100 parts by mass, more preferably not more than 80 parts by mass based on 100 parts by mass of the IR. When the compounding amount of silica is not more than 100 parts by mass, dispersing of the silica can be easy and processability can be satisfactory.

The silica to be used in the kneading step X2 is not limited particularly, and is as explained in the X1 kneading step.

In the kneading step X2, too, it is preferable to knead a silane coupling agent together with the silica, and the silane coupling agent is as explained in the kneading step X1.

(c) Step of kneading BR master batch and IR master batch (kneading step Y)

The BR master batch obtained in the kneading step X1 and the IR master batch obtained in the kneading step X2 are kneaded. Regarding the kneading method, a kneader, which is usually used in a rubber industry, such as a Banbury mixer, an open roll or the like can be used in the same manner as in the above-mentioned kneading steps X1 and X2, and the kneading can be carried out under the conditions usually employed in a rubber industry.

A kneading temperature in the kneading step Y is preferably not less than 80°C, more preferably not less than 100°C, further preferably not less than 145°C. When the kneading temperature is not less than 80°C, a reaction of the silane coupling agent with the silica can be fully advanced, and the silica can be dispersed satisfactorily, thereby making it easy to improve performance on snow and ice and abrasion resistance in good balance. Further, the kneading temperature in the kneading step Y is preferably not more than 200°C, more preferably not more than 190°C, further preferably not more than 160°C. When the kneading temperature is not more than 200°C, there is a tendency that increase in a Mooney viscosity can be inhibited and processability can be satisfactory. Furthermore, the temperature of a kneaded product at the time of discharge from the kneader can be from 130°C to 160°C.

A kneading time in the kneading step Y is not limited particularly, and is usually 30 seconds or more, preferably from 1 to 30 minutes, more preferably from 2 to 6 minutes.

In the process for preparing the vulcanized rubber composition of the present invention, various materials usually used in a rubber industry such as rubber components other than the IR and the BR, a filler such as carbon black, a softening agent such as oil, wax, an antioxidant, stearic acid and zinc oxide may be kneaded as needed in the kneading step X1, the kneading step X2, the kneading step Y and other steps in addition to the above-mentioned materials.

Examples of the other rubber components include diene rubbers such as styrene-butadiene rubber.

Examples of carbon black include furnace black, acetylene black, thermal black, channel black, graphite, and the like, and these carbon blacks may be used alone or may be used in combination of two or more thereof. Among these, furnace black is preferable for the reason that low temperature property and abrasion resistance can be improved in good balance. A step of kneading carbon black is not limited particularly, and the X2-kneading is preferable for the reason that the silica is dispersed preferentially in the BR phase.

A nitrogen adsorption specific surface area ($N_2SA$) of carbon black is not less than 90 $m^2/g$ from a viewpoint that sufficient reinforcing property and abrasion resistance can be obtained. Further, the $N_2SA$ of carbon black is not more than 300 $m^2/g$, more preferably not more than 250 $m^2/g$ from a viewpoint that dispersion thereof is good and heat generation hardly arises. The $N_2SA$ can be measured according to JIS K 6217-2 "Carbon black for rubber industry - Fundamental characteristics - Part 2: Determination of specific surface area - Nitrogen adsorption methods - Single-point procedures".

When carbon black is compounded, the content thereof is not less than 1 part by mass, more preferably not less than 5 parts by mass based on 100 parts by mass of the total rubber components. When the content of carbon black is not less than 1 part by mass, sufficient reinforcing property tends to be obtained. Further, the content of carbon black is not more than 95 parts by mass, more preferably not more than 60 parts by mass, further preferably not more than 20 parts by mass. When the content of carbon black is not more than 95 parts by mass, good processability is obtained, heat generation can be inhibited, and abrasion resistance can be enhanced.

Oil is not limited particularly, and for example, a process oil, vegetable fats and oils, or a mixture thereof can be used. Examples of process oil include a paraffin process oil, an aromatic process oil, a naphthenic process oil, and the like. Examples of vegetable oils and fats include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, tsubaki oil, jojoba oil, macadamia nut oil, tung oil, and the like. Among these, process oils are preferred, and particularly use of a paraffin process oil is preferred.

When compounding oils, a content thereof is preferably not less than 15 parts by mass, more preferably not less than 20 parts by mass based on 100 parts by mass of total rubber components. When the oil content is not less than 15 parts by mass, performance on snow and ice required for a studless tire tends to be exhibited. Further, the oil content is preferably not more than 80 parts by mass, more preferably not more than 70 parts by mass. When the oil content is not more than 80 parts by mass, there is a tendency that deterioration of processability, lowering of abrasion resistance and lowering of resistance to aging are prevented.

An anti-oxidant to be compounded in the present invention can be properly selected from amine, phenol and imidazole compounds, and carbamic acid metal salts. These anti-oxidants may be used alone or may be used in combination of two or more thereof. Among them, amine anti-oxidants are preferred for the reason that an ozone resistance can be improved significantly and an effect for exhibiting such a property can be maintained for a long period of time, and N-(1,3-dimethylbutyl)-N'-phenyl-p-phenylenediamine is more preferred.

When the anti-oxidant is compounded, its content is preferably not less than 0.5 part by mass, more preferably not less than 1.0 part by mass, further preferably not less than 1.2 parts by mass based on 100 parts by mass of total rubber components. When the content of anti-oxidant is not less than 0.5 part by mass, sufficient ozone resistance tends to be obtained. Further, the content of anti-oxidant is preferably not more than 8 parts by mass, more preferably not more than 4 parts by mass, further preferably not more than 2.5 parts by mass. When the content of anti-oxidant is not more than 8 parts by mass, there is a tendency that discoloration can be inhibited and bleeding can be inhibited.

Any of wax, stearic acid and zinc oxide which is used usually in rubber industries can be used suitably.

(d) Step of vulcanizing (kneading step F and vulcanizing step)

A vulcanizing agent and a vulcanization accelerator as required are kneaded with the kneaded product obtained in the above-mentioned Y-kneading in the kneading step F to obtain a kneaded product (un-vulcanized rubber composition). Then, this un-vulcanized rubber composition is molded into a required form, which is laminated as a tire member, followed by vulcanization in accordance with a known method to obtain the vulcanized rubber composition of the present invention.

In the kneading step F, the kneading is started from about 50°C when the kneader is cold and from about 80°C when the kneader is used continuously, and can be performed until the temperature of a kneaded product at the time of discharge from the kneader reaches 95°C to 110°C.

A vulcanizing temperature is preferably not less than 120°C, more preferably not less than 140°C, and is preferably not more than 200°C, more preferably not more than 180°C, from a viewpoint that the effect of the present invention can be obtained satisfactorily. A vulcanizing time is preferably from 5 to 30 minutes from a viewpoint that the effect of the present invention can be obtained satisfactorily.

A vulcanizing agent is not limited particularly, and those usually used in rubber industries can be used, and sulfur atom-containing vulcanizing agents are preferred and a sulfur powder is used particularly preferably.

A vulcanization accelerator also is not limited particularly, and those usually used in rubber industries can be used.

The vulcanized rubber composition obtained by the above-mentioned process for preparing the vulcanized rubber composition of the present invention comprises the phase comprising a butadiene rubber and silica (BR phase), and the phase comprising an isoprene rubber and silica (IR phase), and the BR phase and the IR phase are incompatible with each other. Herein, "incompatible" means that an averaged equivalent circle radius of a discontinuous phase in the section of the vulcanized rubber composition is 100 nm or more, and can be easily evaluated by an image taken with a scanning electron microscope (SEM).

Further, in the vulcanized rubber composition obtained by the process for preparing the vulcanized rubber composition of the present invention, since the abundance ratio $\alpha$ of silica in the BR phase satisfies the following Relation 1, abrasion resistance of the vulcanized rubber composition is enhanced, and when the vulcanized rubber composition is used for a tread, performance on ice is also enhanced. Herein "the abundance ratio $\alpha$ of silica in the BR phase" is an index indicating how much amount of silica among the total amount of silica in the rubber composition is present in the BR phase 100 to 500 hours after completion of the vulcanization step.

$$0.3 \leq \alpha \leq 0.7 \qquad \text{(Relation 1)}$$

wherein, $\alpha$ = Amount of silica in BR phase / (Amount of silica in BR phase + Amount of silica in IR phase).

Specifically, for example, the vulcanized rubber composition is subjected to surface shaping to obtain a sample. In a photograph of a scanning electron microscope (SEM) from one sample, ten regions of 2 $\mu$m $\times$ 2 $\mu$m which do not overlap each other are selected. In each region, an area of silica per unit area and an area of silica in the BR phase per unit area are measured to calculate the abundance ratio $\gamma$ of silica in the BR phase. When it can be confirmed that a difference between a maximum value and a minimum value of the $\gamma$ in the ten regions is within 10%, an average of the $\gamma$ in the ten regions is specified as $\alpha$.

The abundance ratio $\alpha$ of silica in the BR phase is not less than 0.3, preferably not less than 0.5. When the abundance ratio $\alpha$ of silica in the BR phase is less than 0.3, there is a tendency that abrasion resistance and performance on ice cannot be expected to be improved and are rather deteriorated. The abundance ratio $\alpha$ of silica in the BR phase is not more than 0.7, preferably not more than 0.6. When the abundance ratio $\alpha$ of silica in the BR phase is more than 0.7, there is a tendency that particularly abrasion resistance cannot be expected to be improved and is rather deteriorated.

The vulcanized rubber composition obtained by the process for preparing the vulcanized rubber composition of the present invention is one in which the proportion $\beta$ of the butadiene rubber satisfies the following Relation 2:

$$0.4 \leq \beta \leq 0.8 \qquad \text{(Relation 2)}$$

wherein $\beta$ = Mass of butadiene rubber in vulcanized rubber composition / (Mass of butadiene rubber in vulcanized rubber composition + Mass of isoprene rubber in vulcanized rubber composition). The mass of the butadiene rubber in the vulcanized rubber composition and the mass of the isoprene rubber in the vulcanized rubber composition correspond to the contents of the respective rubbers compounded when preparing the vulcanized rubber composition.

The proportion $\beta$ of the butadiene rubber is not less than 0.4, preferably not less than 0.5. When the proportion $\beta$ of the butadiene rubber is less than 0.4, there is a tendency that enhancement of the obtained performance on ice cannot be expected. Further the proportion $\beta$ of the butadiene rubber is not more than 0.8, preferably not more than 0.7. When the proportion $\beta$ of the butadiene rubber exceeds 0.8, the content of isoprene rubber becomes smaller and there is a tendency that sufficient breaking strength and abrasion resistance cannot be obtained.

In the vulcanized rubber composition obtained by the process for preparing the vulcanized rubber composition of the present invention, the total content of the butadiene rubber and the isoprene rubber in the total rubber components is preferably not less than 70% by mass, more preferably not less than 80% by mass, further preferably 90% by mass, particularly preferably 100% by mass. As the total content of the butadiene rubber and the isoprene rubber is higher, low temperature property is excellent and required performance on snow and ice can be exhibited. Therefore, it is preferable to use rubber components consisting of the butadiene rubber and the isoprene rubber.

By the above-mentioned process for preparing the vulcanized rubber composition of the present invention, silica which is easily localized in the IR can be also localized in the BR, thereby making it possible to disperse silica in the whole vulcanized rubber composition. Thus, performance on ice can be improved by silica without impairing good abrasion resistance of the isoprene rubber, and these performances can be obtained in good balance.

A vulcanized rubber composition according to another embodiment of the present invention is a vulcanized rubber composition having the phase comprising the butadiene rubber and silica (BR phase) and the phase comprising the isoprene rubber and silica (IR phase), wherein the BR phase and the IR phase are incompatible with each other, an abundance ratio $\alpha$ of silica in the BR phase 100 to 500 hours after completion of the vulcanization step satisfies the following Relation 1, and the proportion $\beta$ of the butadiene rubber satisfies the following Relation 2:

$$0.3 \leq \alpha \leq 0.7 \qquad (\text{Relation 1})$$

$$0.4 \leq \beta \leq 0.8 \qquad (\text{Relation 2})$$

wherein $\alpha$ = Amount of silica in BR phase / (Amount of silica in BR phase + Amount of silica in IR phase) and $\beta$ = Mass of butadiene rubber in vulcanized rubber composition / (Mass of butadiene rubber in vulcanized rubber composition + Mass of isoprene rubber in vulcanized rubber composition), and the vulcanized rubber composition can be prepared, for example, by the above-mentioned process for preparing the vulcanized rubber composition of the present invention.

The explanation made herein on the vulcanized rubber composition is applicable to not only the above-mentioned vulcanized rubber composition according to one embodiment of the present invention but also the vulcanized rubber composition obtained by the above-mentioned process for preparing the vulcanized rubber composition according to one embodiment of the present invention, and the statements made herein in the explanation on the process for preparing the vulcanized rubber composition according to one embodiment of the present invention relating to compounding ratios of various materials, properties of the obtained vulcanized rubber composition and the like are also applicable to the above-mentioned vulcanized rubber composition according to one embodiment of the present invention.

In the vulcanized rubber composition of the present invention, the butadiene rubber forms a sea phase and the isoprene rubber forms an island phase and the abundance ratio of silica in the butadiene rubber is 30% or more. When sufficient localization of silica in the butadiene rubber is not seen, namely when the abundance ratio of silica in the BR phase is less than 0.3, since a hardness of the isoprene rubber as such tends to be larger than that of the butadiene rubber, a further difference in hardness arises due to location of silica and lowering of abrasion resistance tends to be seen.

It is preferable that the vulcanized rubber composition of the present invention comprises 25 to 120 parts by mass of a filler and 15 to 80 parts by mass of a softening agent based on 100 parts by mass of rubber components comprising the isoprene rubber and the butadiene rubber.

A content of filler is not less than 25 parts by mass, preferably not less than 30 parts by mass based on 100 parts by mass of rubber components. When the filler content is not less than 25 parts by mass, there is a tendency that abrasion resistance and breaking resistance become satisfactory. Also, the filler content is preferably not more than 120 parts by mass, more preferably not more than 70 parts by mass. When the filler content is not more than 120 parts by mass, there is a tendency that processability and workability are enhanced and lowering of low temperature property due to an increased amount of filler is prevented. Examples of the filler include silica, carbon black, aluminum hydroxide and the like, and it is preferable that silica is blended in an amount of preferably not less than 50% by mass, more preferably not less than 70% by mass based on the total amount of filler.

The total silica content is not less than 25 parts by mass, more preferably not less than 38 parts by mass, based on 100 parts by mass of the rubber components. When the total silica content is not less than 25 parts by mass, there is a tendency that abrasion resistance and breaking resistance become satisfactory. Further, the total silica content is not more than 80 parts by mass, based on 100 parts by mass of the rubber components. When the total silica content is not more than 80 parts by mass, there is a tendency that processability and workability are enhanced and lowering of low temperature property due to an increased amount of silica is prevented.

A content of the softening agent is preferably not less than 15 parts by mass, more preferably not less than 20 parts by mass based on 100 parts by mass of the rubber components. When the content of the softening agent is not less than 15 parts by mass, there is a tendency that performance on snow and ice required for a studless tire is exhibited. Also, the content of the softening agent is preferably not more than 80 parts by mass, more preferably not more than 70 parts by mass. When the content of the softening agent is not more than 80 parts by mass, there is a tendency that lowering of processability, lowering of abrasion resistance and deterioration of resistance to aging are prevented. Examples of the softening agent include an aromatic oil, a naphthenic oil, a paraffinic oil, a terpene resin, and the like.

The vulcanized rubber composition according to one embodiment of the present invention and the vulcanized rubber composition obtained by the process for preparing the vulcanized rubber composition according to one embodiment of the present invention can be used for tire application, for example, tire members such as a tread, a carcass, a side wall and a bead as well as other industrial products such as a vibration proof rubber, a belt and a hose. Particularly, from the viewpoint of satisfactory performance on ice and abrasion resistance, the vulcanized rubber composition is used suitably on a tread, and in the case of a tread of two-layer structure comprising a cap tread and a base tread, is suitably used on the cap tread.

The studless tire of the present invention can be produced by a usual method using the vulcanized rubber composition according to one embodiment of the present invention. Namely the rubber composition of the present invention is extrusion-processed into a shape of a tread of a tire in its unvulcanized state, and further, the obtained extruded product is laminated with other tire parts to form an unvulcanized tire on a tire molding machine by a usual forming method. The studless tire of the present invention can be produced by heating and pressurizing this unvulcanized tire in a vulcanizer.

EXAMPLE

The present invention is explained below by means of Examples, but is not limited to only the Examples.
Various kinds of chemicals used in Examples and Comparative Examples are collectively shown below.

Butadiene rubber (BR1): BR730 available from JSR Corporation
(cis-1,4 content: 95%)
Butadiene rubber (BR2): BR1250 available from ZEON CORPORATION
(cis-1,4 content: 45%)
Isoprene rubber (IR1): Natural rubber (NR) (RSS#3)
Isoprene rubber (IR2): Natural rubber (NR) (TSR20)
Carbon black: DIABLACK I (ISAF carbon, $N_2SA$: 114 $m^2/g$, average particle size: 23 nm) available from Mitsubishi Chemical Corporation
Silica: ULTRASIL (registered trade mark) VN3 ($N_2SA$: 175 $m^2/g$) available from EVONIK INDUSTRIES AG
Silane coupling agent: Si266 available from EVONIK INDUSTRIES AG
Mineral oil: PS-32 (paraffinic process oil) available from Idemitsu Kosan Co., Ltd.
Stearic acid: Stearic acid "Kiri" available from NOF CORPORATION
Zinc oxide: Zinc oxide II available from MITSUI MINING & SMELTING CO., LTD.
Antioxidant: NOCRAC 6C (N-(1,3-dimethylbutyl)-N-phenyl-p-phenylenediamine) available from OUCHI SHINKO CHEMICAL INDUSTRIAL CO., LTD.
Wax: Ozoace wax available from NIPPON SEIRO CO., LTD.
Sulfur: Sulfur powder available from TSURUMI CHEMICAL INDUSTRY CO., LTD.
Vulcanization accelerator NS: NOCCELER NS (N-tert-butyl-2-benzothiazolylsulfenamide) available from OUCHI SHINKO CHEMICAL INDUSTRIAL CO., LTD.
Vulcanization accelerator DPG: NOCCELER D (1,3-diphenylguanidine) available from OUCHI SHINKO CHEMICAL INDUSTRIAL CO., LTD.

Examples 1 to 10 and Comparative Examples 1 to 5

According to the formulation shown in step (I) of Table 1 or 2, rubber components, silica and other materials were kneaded for three minutes with a 1.7 liter Banbury mixer at the compound temperature at the time of discharge from the mixer of 150°C to obtain each of kneaded product comprising the butadiene rubber and silica (BR master batches) and kneaded product comprising the isoprene rubber and silica (IR master batches). Next, the obtained kneaded product and other materials in accordance with the formulation shown in step (II) of Table 1 or 2 were kneaded for five minutes at the compound temperature at the time of discharge from the mixer of 150°C to obtain a kneaded product. To the obtained kneaded product were added sulfur and a vulcanization accelerator in accordance with the formulation shown in step (III) of Table 1 or 2, followed by 5-minute kneading at a temperature of 150°C using an open roll to obtain an un-vulcanized rubber composition. In the case where no compounding amount is described in the step (I) of Table 1 or 2, only the step (II) was carried out.
Each of the obtained un-vulcanized rubber compositions was press-vulcanized for 12 minutes at 170°C using a 0.5 mm thick metal mold to obtain each of vulcanized rubber compositions.
Further, each of the obtained vulcanized rubber compositions was formed into a shape of a cap tread which was then laminated with other tire members, followed by 15-minute vulcanization at 170°C to produce a studless tire for test (tire size: 195/65R15).

The obtained vulcanized rubber compositions and test studless tires were stored at room temperature, and 200 hours after completion of vulcanization (about one week later), the following tests were performed to evaluate abrasion resistance, performance on ice and localization of silica. Further, with respect to the vulcanized rubber compositions, a state thereof 200 hours after completion of vulcanization was compared with a state thereof one year after completion of vulcanization, and stability over time of a dispersed state of silica was evaluated. Each of test results is shown in Tables 1 and 2.

<Abrasion resistance>

An abrasion loss of each vulcanized rubber composition was measured with a Lambourn abrasion testing machine being available from IWAMOTO Quartz GlassLabo Co., Ltd. under the conditions of a surface rotation speed of 50 m/min, a load of 3.0 kg, an amount of falling sand of 15 g/min, and a slip ratio of 20%, and a reciprocal of the abrasion loss was obtained. A reciprocal of the abrasion loss of Comparative Example 1 is assumed to be 100, and reciprocals of other abrasion losses are indicated by indexes. The larger the index is, the more excellent the abrasion resistance is.

<Performance on ice>

In-vehicle running on ice surface was carried out under the following conditions using studless tires of Examples and Comparative Examples, and performance on ice was evaluated. The test was performed at the test course of Sumitomo Rubber Industries, Ltd. in Nayoro, Hokkaido, and air temperature on snow was -2°C to -6°C. The test tires were mounted on a 2000 cc domestic FR car, and a lock brake was applied at a speed of 30 km/hr. A stopping distance required for stopping the car after putting on the lock brake was measured, and was indicated by a value calculated by the following equation based on the distance of Comparative Example 1.

$$\text{(Performance on ice)} = \text{(Stopping distance of Comparative Example 1)} /$$

$$\text{(Stopping distance of each compounding formulation)} \times 100$$

<Evaluation of morphology and evaluation of localization of silica>

A vulcanized rubber composition was subjected to surface shaping and observed with a scanning electron microscope (SEM). The morphology of each phase could be confirmed by comparison of a contrast. As a result, in Examples and Comparative Examples, it was confirmed that the phase comprising the butadiene rubber (BR phase) and the phase comprising the isoprene rubber (IR phase) are incompatible with each other. The BR phase formed a sea phase and the IR phase formed an island phase, and in Examples, silica was dispersed in both of the BR phase and the IR phase.

Silica can be observed in the form of particulate. In an SEM photograph of one sample, ten regions of 2 $\mu$m × 2 $\mu$m each which do not overlap each other were selected. In each region, an area of silica per unit area of each phase was measured, and an abundance ratio $\gamma$ of the silica of the BR phase was calculated. After confirming that a difference between the maximum ratio and the minimum ratio among the ratios $\gamma$ of the ten regions is within 10%, an average of the ratios $\gamma$ in the ten regions was obtained and indicated by $\alpha$.

<Stability over time of a dispersed state of silica>

With respect to the same vulcanized rubber composition, an abundance ratio $\alpha$ of silica in the BR phase in a state one year after completion of vulcanization was measured in the same manner as above. Then, a rate of change of the abundance ratio $\alpha$ of silica in the BR phase in a state one year after completion of vulcanization to an abundance ratio $\alpha$ of silica in the BR phase in a state 200 hours after completion of vulcanization was determined.

$$\text{Rate of change (\%)} = |\alpha \text{ (one year after)} - \alpha \text{ (200 hours after)}| / \alpha \text{ (200 hours after)} \times 100$$

The stability over time of a dispersed state of silica of each of Examples and Comparative Examples was evaluated in accordance with the following criteria for evaluation. The smaller the rate of change is, the more satisfactory the evaluation result is.

A: Rate of change being within 10%.
B: Rate of change exceeding 10% and not more than 30%.
C: Rate of change exceeding 30%.

Table 1

| | Example 1 | | Example 2 | | Example 3 | | Example 4 | | Example 5 | |
|---|---|---|---|---|---|---|---|---|---|---|
| | BR | IR | BR | IR | BR | IR | BR | IR | BR | IR |
| **Compounding amount (part by mass)** | | | | | | | | | | |
| Step (I) | | | | | | | | | | |
| IR1 | - | 40 | - | 60 | - | 20 | - | 40 | - | 40 |
| IR2 | - | - | - | - | - | - | - | - | - | - |
| BR1 | 60 | - | 40 | - | 80 | - | 60 | - | 60 | - |
| BR2 | - | - | - | - | - | - | - | - | - | - |
| Carbon black | - | 5 | - | 5 | - | 5 | - | 5 | - | 5 |
| Silica | 45 | 15 | 30 | 30 | 50 | 10 | 30 | 30 | 50 | 10 |
| Silane coupling agent | 3 | 1 | 2 | 1 | 3 | 1 | 2 | 2 | 3 | 1 |
| Oil | 10 | 10 | 15 | 5 | 10 | 10 | 10 | 10 | 15 | 5 |
| Step (II) | | | | | | | | | | |
| IR1 | | - | | - | | - | | - | | - |
| BR1 | | - | | - | | - | | - | | - |
| Carbon black | | - | | - | | - | | - | | - |
| Silica | | - | | - | | - | | - | | - |
| Silane coupling agent | | - | | - | | - | | - | | - |
| Wax | | 1 | | 1 | | 1 | | 1 | | 1 |
| Antioxidant | | 2 | | 2 | | 2 | | 2 | | 2 |
| Oil | | - | | - | | - | | - | | - |
| Stearic acid | | 1 | | 1 | | 1 | | 1 | | 1 |
| Zinc oxide | | 1.5 | | 1.5 | | 1.5 | | 1.5 | | 1.5 |
| Step (III) | | | | | | | | | | |
| Sulfur | | 1 | | 1 | | 1 | | 1 | | 1 |
| Vulcanization accelerator | | 2 | | 2 | | 2 | | 2 | | 2 |
| **Evaluation** | | | | | | | | | | |
| Index of abrasion resistance | | 113 | | 120 | | 105 | | 105 | | 102 |
| Index of performance on ice | | 120 | | 105 | | 110 | | 103 | | 122 |
| Abundance ratio of silica in BR phase ($\alpha$) | | 0.5 | | 0.5 | | 0.5 | | 0.3 | | 0.7 |
| Stability of dispersion of silica | | A | | A | | A | | A | | A |
| | Com. Ex. 1 | | Com. Ex. 2 | | Com. Ex. 3 | | Com. Ex. 4 | | Com. Ex. 5 | |
| | BR | IR | BR | IR | BR | IR | BR | IR | BR | IR |
| **Compounding amount (part by mass)** | | | | | | | | | | |
| Step (I) | | | | | | | | | | |
| IR1 | - | - | - | 40 | - | 70 | - | 10 | - | 40 |
| IR2 | - | - | - | - | - | - | - | - | - | - |
| BR1 | - | - | - | - | 30 | - | 90 | - | 60 | - |
| BR2 | - | - | - | - | - | - | - | - | - | - |
| Carbon black | - | - | - | 5 | - | - | - | 5 | - | 5 |

(continued)

| | Com. Ex. 1 | | Com. Ex. 2 | | Com. Ex. 3 | | Com. Ex. 4 | | Com. Ex. 5 | |
|---|---|---|---|---|---|---|---|---|---|---|
| | BR | IR | BR | IR | BR | IR | BR | IR | BR | IR |
| Compounding amount (part by mass) | | | | | | | | | | |
| Step (I) | | | | | | | | | | |
|   Silica | - | - | - | 45 | 30 | 20 | 50 | 10 | 70 | - |
|   Silane coupling agent | - | - | - | 3 | 1 | 1 | 3 | 1 | 4 | - |
|   Oil | - | - | - | 10 | 10 | 10 | 15 | 5 | 20 | 3 |
| Step (II) | | | | | | | | | | |
|   IR1 | 40 | | - | | - | | - | | - | |
|   BR1 | 60 | | 60 | | - | | - | | - | |
|   Carbon black | 5 | | - | | - | | - | | - | |
|   Silica | 60 | | 15 | | - | | - | | - | |
|   Silane coupling agent | 4 | | 1 | | - | | - | | - | |
|   Wax | 1 | | 1 | | 1 | | 1 | | 1 | |
|   Antioxidant | 2 | | 2 | | 2 | | 2 | | 2 | |
|   Oil | 20 | | 10 | | - | | - | | - | |
|   Stearic acid | 1 | | 1 | | 1 | | 1 | | 1 | |
|   Zinc oxide | 1.5 | | 1.5 | | 1.5 | | 1.5 | | 1.5 | |
| Step (III) | | | | | | | | | | |
|   Sulfur | 1 | | 1 | | 1 | | 1 | | 1 | |
|   Vulcanization accelerator | 2 | | 2 | | 2 | | 2 | | 2 | |
| Evaluation | | | | | | | | | | |
|   Index of abrasion resistance | 100 | | 98 | | 85 | | 105 | | 95 | |
|   Index of performance on ice | 100 | | 95 | | 110 | | 85 | | 110 | |
|   Abundance ratio of silica in BR phase ($\alpha$) | 0.1 | | 0.05 | | 0.5 | | 0.5 | | 0.9 | |
|   Stability of dispersion of silica | - | | - | | C | | C | | - | |

Table 2

| | Example 6 | | Example 7 | | Example 8 | | Example 9 | | Example 10 | |
|---|---|---|---|---|---|---|---|---|---|---|
| | BR | IR | BR | IR | BR | IR | BR | IR | BR | IR |
| Compounding amount (part by mass) | | | | | | | | | | |
| Step (I) | | | | | | | | | | |
|   IR1 | - | 40 | - | 40 | - | - | - | 40 | - | - |
|   IR2 | - | - | - | - | - | 40 | - | - | - | 40 |
|   BR1 | 60 | - | 60 | - | 60 | - | - | - | - | - |
|   BR2 | - | - | - | - | - | - | 60 | - | 60 | - |
|   Carbon black | - | 5 | - | 5 | - | 5 | - | 5 | - | 5 |
|   Silica | 25 | 10 | 45 | 15 | 45 | 15 | 45 | 15 | 45 | 15 |
|   Silane coupling agent | 2 | 1 | 3 | 1 | 3 | 1 | 3 | 1 | 3 | 1 |
|   Oil | 10 | 5 | 30 | 10 | 10 | 10 | 10 | 10 | 10 | 10 |
| Step (II) | | | | | | | | | | |
|   IR1 | - | | - | | - | | - | | - | |
|   BR1 | - | | - | | - | | - | | - | |
|   Carbon black | - | | - | | - | | - | | - | |
|   Silica | - | | - | | - | | - | | - | |

(continued)

| Step (II) | | | | | |
|---|---|---|---|---|---|
| Silane coupling agent | - | - | - | - | - |
| Wax | 1 | 1 | 1 | 1 | 1 |
| Antioxidant | 2 | 2 | 2 | 2 | 2 |
| Oil | - | - | - | - | - |
| Stearic acid | 1 | 1 | 1 | 1 | 1 |
| Zinc oxide | 1.5 | 1.5 | 1.5 | 1.5 | 1.5 |
| Step (III) | | | | | |
| Sulfur | 1 | 1 | 1 | 1 | 1 |
| Vulcanization accelerator | 2 | 2 | 2 | 2 | 2 |
| Evaluation | | | | | |
| Index of abrasion resistance | 105 | 107 | 114 | 105 | 101 |
| Index of performance on ice | 120 | 120 | 121 | 108 | 103 |
| Abundance ratio of silica in BR phase ($\alpha$) | 0.5 | 0.5 | 0.5 | 0.5 | 0.5 |
| Stability of dispersion of silica | A | A | A | A | A |

From the results shown in Tables 1 and 2, it is seen that by the process of preparing the two kinds of master batches, one comprising the BR and another one comprising the IR, wherein each of the master batches comprises silica, and then kneading the master batches, the vulcanized rubber composition having a satisfactory abundance ratio $\alpha$ of silica in the BR phase can be prepared, and stability of dispersion of silica is satisfactory. Further, it is seen that the vulcanized rubber composition having such a satisfactory abundance ratio $\alpha$ of silica in the BR phase can improve abrasion resistance and performance on ice in good balance.

EXPLANATION OF SYMBOLS

1　BR phase
2　IR phase
3　Silica
4　Carbon black

**Claims**

1. A process for preparing a vulcanized rubber composition comprising:

   (a) a step of preparing a master batch comprising a butadiene rubber and not less than 40 parts by mass of silica based on 100 parts by mass of the butadiene rubber,
   (b) a step of preparing a master batch comprising an isoprene rubber and not less than 15 parts by mass of silica based on 100 parts by mass of the isoprene rubber,
   (c) a step of kneading the master batch obtained in the step (a) and the master batch obtained in the step (b), and
   (d) a step of vulcanizing a kneaded product obtained in the step (c), wherein the vulcanized rubber composition comprises:

      a phase comprising the butadiene rubber and silica (BR phase), and a phase comprising the isoprene rubber and silica (IR phase),
      wherein the BR phase and the IR phase are incompatible with each other, wherein the term "incompatible" means that an averaged equivalent circle radius of a discontinuous phase in the section of the vulcanized rubber composition is 100 nm or more when evaluated based on an image taken with a scanning electron microscope,
      an abundance ratio $\alpha$ of silica in the BR phase 100 to 500 hours after completion of a vulcanization step satisfies the following Relation 1, and
a proportion $\beta$ of the butadiene rubber satisfies the following Relation 2:

$$0.3 \leq \alpha \leq 0.7 \qquad \text{(Relation 1)}$$

$$0.4 \leq \beta \leq 0.8 \qquad \text{(Relation 2)}$$

wherein $\alpha$ = Amount of silica in BR phase / (Amount of silica in BR phase + Amount of silica in IR phase) and $\beta$ = Mass of butadiene rubber in vulcanized rubber composition/ (Mass of butadiene rubber in vulcanized rubber composition + Mass of isoprene rubber in vulcanized rubber composition), and
wherein the vulcanized rubber composition comprises a filler comprising 1 to 95 parts by mass of carbon black having a nitrogen adsorption specific surface area ($N_2SA$) of 90 to 300 $m^2$/g and 25 to 80 parts by mass of silica based on 100 parts by mass of the total rubber components,
wherein the $N_2SA$ is measured according to JIS K 6217-2.

2. The process for preparation of claim 1, wherein the butadiene rubber has a content of cis-1,4 bond of not less than 90%.

3. The process for preparation of claim 1 or 2, wherein the vulcanized rubber composition comprises 30 to 120 parts by mass of the filler and 15 to 80 parts by mass of a softening agent based on 100 parts by mass of a rubber component comprising the isoprene rubber and the butadiene rubber, and the filler comprises not less than 50% by mass of silica based on a total amount of the filler.

4. A vulcanized rubber composition obtainable by the process for preparing a vulcanized rubber composition according to any one of claims 1 to 3.

5. The vulcanized rubber composition of claim 4, wherein the butadiene rubber has a content of cis-1,4 bond of not less than 95%.

6. The vulcanized rubber composition of claim 4 or 5, comprising 30 to 70 parts by mass of a filler and 20 to 70 parts by mass of a softening agent based on 100 parts by mass of the rubber components comprising the isoprene rubber and the butadiene rubber, wherein the filler comprises not less than 70% by mass of silica based on the total amount of filler.

7. A studless tire comprising a tread composed of the vulcanized rubber composition of any one of claims 4 to 6.

**Patentansprüche**

1. Verfahren zur Herstellung einer vulkanisierten Kautschukzusammensetzung, welches umfasst:

(a) einen Schritt des Herstellens eines Masterbatches, der einen Butadienkautschuk und nicht weniger 40 Massenteile Siliciumdioxid bezogen auf 100 Massenteile des Butadienkautschuks umfasst,
(b) einen Schritt des Herstellens eines Masterbatches, der einen Isoprenkautschuk und nicht weniger als 15 Massenteile Siliciumdioxid bezogen auf 100 Massenteile des Isoprenkautschuks umfasst,
(c) einen Schritt des Verknetens des im Schritt (a) erhaltenen Masterbatches und des im Schritt (b) erhaltenen Masterbatches, und
(d) einen Schritt des Vulkanisierens eines im Schritt (c) erhaltenen verkneteten Produkts,

wobei die vulkanisierte Kautschukzusammensetzung umfasst:

eine Phase, die den Butadienkautschuk und Siliciumdioxid umfasst (Butadienkautschuk-Phase) und eine Phase, die den Isoprenkautschuk und Siliciumdioxid umfasst (Isoprenkautschuk-Phase),
wobei die Butadienkautschuk-Phase und die Isoprenkautschuk-Phase miteinander inkompatibel sind, wobei der Begriff "inkompatibel" bedeutet, dass ein gemittelter Äquivalentkreis-Radius einer diskontinuierlichen Phase in der Schnittfläche der vulkanisierten Kautschukzusammensetzung, bei Bewertung basierend auf einer mit einem Rasterelektronenmikroskop aufgenommenen Abbildung, 100 nm oder mehr beträgt, ein Häufigkeitsverhältnis $\alpha$ von Siliciumdioxid in der Butadienkautschuk-Phase 100 bis 500 Stunden nach Abschluss eines Vulkanisationsschrittes die folgende Ungleichung 1 erfüllt, und ein Anteil $\beta$ des Butadienkautschuks die folgende Ungleichung 2 erfüllt:

$$0{,}3 \leq \alpha \leq 0{,}7 \text{ (Ungleichung 1)}$$

$$0{,}4 \leq \beta \leq 0{,}8 \text{ (Ungleichung 2)}$$

wobei $\alpha$ = Menge an Siliciumdioxid in Butadienkautschuk-Phase / (Menge an Siliciumdioxid in Butadienkautschuk-Phase + Menge an Siliciumdioxid in Isoprenkautschuk-Phase) und $\beta$ = Masse an Butadienkautschuk in vulkanisierter Kautschukzusammensetzung / (Masse an Butadienkautschuk in vulkanisierter Kautschukzusammensetzung + Masse an Isoprenkautschuk in vulkanisierter Kautschukzusammensetzung), und wobei die vulkanisierte Kautschukzusammensetzung einen Füllstoff umfasst, der 1 bis 95 Massenteile Ruß mit einer spezifischen Stickstoffadsorptionsoberfläche ($N_2SA$) von 90 bis 300 $m^2/g$ und 25 bis 80 Massenteile Siliciumdioxid umfasst, bezogen auf 100 Massenteile der gesamten Kautschukkomponenten, wobei die $N_2SA$ gemäß JIS K 6217-2 gemessen ist.

2. Herstellungsverfahren nach Anspruch 1, wobei der Butadienkautschuk einen cis-1,4-Bindungsanteil von nicht weniger als 90% aufweist.

3. Herstellungsverfahren nach Anspruch 1 oder 2, wobei die vulkanisierte Kautschukzusammensetzung 30 bis 120 Massenteile des Füllstoffes und 15 bis 80 Massenteile eines Weichmachers umfasst, bezogen auf 100 Massenteile einer Kautschukkomponente, die den Isoprenkautschuk und den Butadienkautschuk umfasst, und der Füllstoff nicht weniger als 50 Massenprozent Siliciumdioxid umfasst, bezogen auf eine Gesamtmenge des Füllstoffes.

4. Vulkanisierte Kautschukzusammensetzung, erhältlich durch das Verfahren zur Herstellung einer vulkanisierten Kautschukzusammensetzung nach einem der Ansprüche 1 bis 3.

5. Vulkanisierte Kautschukzusammensetzung nach Anspruch 4, wobei der Butadienkautschuk einen cis-1,4-Bindungsanteil von nicht weniger als 95% aufweist.

6. Vulkanisierte Kautschukzusammensetzung nach Anspruch 4 oder 5, welche 30 bis 70 Massenteile eines Füllstoffes und 20 bis 70 Massenteile eines Weichmachers umfasst, bezogen auf 100 Massenteile der Kautschukkomponenten, die den Isoprenkautschuk und den Butadienkautschuk umfassen, wobei der Füllstoff nicht weniger als 70 Massenprozent Siliciumdioxid umfasst, bezogen auf die Gesamtmenge an Füllstoff.

7. Spikeloser Reifen, welcher einen Laufstreifen umfasst, der mit der vulkanisierten Kautschukzusammensetzung nach einem der Ansprüche 4 bis 6 zusammengesetzt ist.

**Revendications**

1. Procédé de préparation d'une composition de caoutchouc vulcanisé comprenant :

(a) une étape de préparation d'un lot maître comprenant un caoutchouc de butadiène et pas moins de 40 parties en masse de silice sur la base de 100 parties en masse du caoutchouc de butadiène,
(b) une étape de préparation d'un lot maître comprenant un caoutchouc d'isoprène et pas moins de 15 parties en masse de silice sur la base de 100 parties en masse du caoutchouc d'isoprène,
(c) une étape de pétrissage du lot maître obtenu dans l'étape (a) et du lot maître obtenu dans l'étape (b), et
(d) une étape de vulcanisation d'un produit pétri obtenu dans l'étape (c), dans lequel la composition de caoutchouc vulcanisé comprend :

une phase comprenant le caoutchouc de butadiène et la silice (phase BR) et une phase comprenant le caoutchouc d'isoprène et la silice (phase IR), la phase BR et la phase IR étant incompatibles l'une avec l'autre, le terme « incompatible » signifiant qu'un rayon de cercle équivalent moyenné d'une phase discontinue dans la section de la composition de caoutchouc vulcanisé est de 100 nm ou plus quand elle est évaluée sur la base d'une image prise avec un microscope électronique à balayage,

un rapport d'abondance $\alpha$ de silice dans la phase BR 100 à 500 heures après la fin d'une étape de vulcanisation satisfait la relation 1 suivante, et

une proportion $\beta$ du caoutchouc de butadiène satisfait la relation 2 suivante :

$$0,3 \leq \alpha \leq 0,7 \quad \text{(relation 1)}$$

$$0,4 \leq \beta \leq 0,8 \quad \text{(relation 2)}$$

$\alpha$ = quantité de silice dans la phase BR / (quantité de silice dans la phase BR + quantité de silice dans la phase IR) et $\beta$ = masse de caoutchouc de butadiène dans la composition de caoutchouc vulcanisé / (masse de caoutchouc de butadiène dans la composition de caoutchouc vulcanisé + masse de caoutchouc d'isoprène dans la composition de caoutchouc vulcanisé), et la composition de caoutchouc vulcanisé comprenant une charge comprenant 1 à 95 parties en masse de noir de charbon ayant une surface spécifique d'adsorption d'azote ($N_2SA$) de 90 à 300 m$^2$/g et 25 à 80 parties en masse de silice sur la base de 100 parties en masse des composants de caoutchouc totaux,

dans lequel la $N_2SA$ étant mesurée selon la norme JIS K 6217-2.

2. Procédé de préparation selon la revendication 1, dans lequel le caoutchouc de butadiène a une teneur de liaison cis-1,4 de pas moins de 90 %.

3. Procédé de préparation selon la revendication 1 ou 2, dans lequel la composition de caoutchouc vulcanisé comprend 30 à 120 parties en masse de la charge et 15 à 80 parties en masse d'un agent de ramollissement sur la base de 100 parties en masse d'un composant de caoutchouc comprenant le caoutchouc d'isoprène et le caoutchouc de butadiène, et la charge ne comprend pas moins de 50 % en masse de silice sur la base d'une quantité totale de la charge.

4. Composition de caoutchouc vulcanisé que l'on peut obtenir par le procédé de préparation d'une composition de caoutchouc vulcanisé selon l'une quelconque des revendications 1 à 3.

5. Composition de caoutchouc vulcanisé selon la revendication 4, dans laquelle le caoutchouc de butadiène a une teneur de liaison cis-1,4 de pas moins de 95 %.

6. Composition de caoutchouc vulcanisé selon la revendication 4 ou 5, comprenant 30 à 70 parties en masse d'une charge et 20 à 70 parties en masse d'un agent de ramollissement sur la base de 100 parties en masse des composants de caoutchouc comprenant le caoutchouc d'isoprène et le caoutchouc de butadiène, la charge comprenant pas moins de 70 % en masse de silice sur la base de la quantité totale de la charge.

7. Pneu sans clou comprenant une bande composée de la composition de caoutchouc vulcanisé selon l'une quelconque des revendications 4 à 6.

## FIG. 1A

2 µm

## FIG. 1B

2 µm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011038057 A
- JP 2006089636 A
- JP 2006348222 A
- EP 2233317 A1
- US 20120305828 A1
- JP 2006306930 A
- JP H06248117 A
- JP 2014145063 A